# FASCICULE DE BREVET EUROPEEN

(11) **EP 0 526 263 B1**
(45) Date de publication et mention de la délivrance du brevet: **11.02.1998**
(21) Numéro de dépôt: 92401594.4
(22) Date de dépôt: 10.06.1992
(51) Int. Cl.: B32B 17/10, C03B 27/00

(54) **Vitrage et son procédé d'obtention**
Verbundscheibe und Verfahren zur ihrer Herstellung
Glazing and process for obtaining it

(30) Priorité: 11.06.1991 FR 9107091
(43) Date de publication de la demande: 03.02.1993
(73) Titulaire: SAINT-GOBAIN VITRAGE, 92400 Courbevoie (FR)
(72) Inventeur: Krämling, Franz, W-5100 Aachen (DE); Charrue, Hervé, F-92500 Rueil Malmaison (FR); Letemps, Bernard, F-60150 Thourotte (FR); Didelot, Claude, F-60150 Thourotte (FR); Weber, Fréderic, F-60200 Compiegne (FR)
(74) Mandataire: Menes, Catherine

(56) Documents cités:
- WO-A-90/03337
- US-A- 2 247 118

## Description

La présente invention concerne un vitrage plus spécialement destiné aux véhicules automobiles et notamment à l'équipement des parties latérales avec des vitres coulissantes. Ce vitrage, peut-être un vitrage de sécurité en verre dit feuilleté dont la ou les feuilles de verre ont subi un traitement thermique et sont assemblées les unes aux autres par une feuille de matière plastique. L'invention a également pour objet un procédé d'obtention d'un tel vitrage.

Pour améliorer la résistance mécanique d'une feuille de verre, il est bien connu qu'il est avantageux de procéder à un traitement dit de trempe thermique permettant la mise en compression de la surface du verre, la résitance du verre à la compression étant bien supérieure à sa résistance en tension.

La trempe thermique consiste à refroidir la surface d'une feuille de verre de manière à la solidifier en surface avant que l'intérieur ne soit figé de sorte que lorsque le refroidissement se poursuit sur toute l'épaisseur, l'intérieur ne peut se contracter normalement, bloqué par la solidification de la surface. L'intérieur se trouve alors soumis à des contraintes d'extension alors qu'en surface, se forment des contraintes de compression.

Quand on considère l'état des contraintes induites dans une feuille de verre par un tel traitement thermique, il doit être distingué trois régions principales. La première région est la région centrale, peu influencée par le bord et où, en première approximation, il peut être considéré que la feuille de verre se comporte comme une feuille de verre de dimensions infinies. Si cette feuille de verre est d'épaisseur constante et est refroidie de manière uniforme sur ses deux faces, les contraintes sont réparties selon l'épaisseur de la feuille selon une distribution parabolique caractérisée par une contrainte de compression de surface et une contrainte d'extension dans le plan médian de la feuille encore appelée contrainte de tension à coeur. Cette répartition dite des contraintes d'épaisseur est isotrope, l'intégrale des contraintes suivant l'épaisseur étant nulle, ainsi que celle des moments.

En théorie, la valeur de la contrainte de compression de surface est exactement égale au double de la valeur de la contrainte de tension à coeur, encore qu'en pratique, une valeur plus élevée doit être retenue.

Par ailleurs, une feuille de verre a bien sûr des dimensions finies et sur ses arêtes, le refroidissement affecte également la tranche et concerne localement toute l'épaisseur de la feuille de verre. Dans la région limitrophe des bords ainsi affectée, l'intégrale des contraintes selon l'épaisseur n'est plus nulle mais traduit une prépondérance des contraintes de compression. Dans cette région, les contraintes d'épaisseur sont donc anisotropes. La contrainte tangentielle à la surface, moyennée sur toute l'épaisseur de la feuille de verre est dite contrainte de bord. Cette région marginale a une importance toute particulière, notamment lors du montage et dans le cas de vitrages montés avec un bord libre, comme par exemple les vitrages latéraux coulissants d'un véhicule automobile. La largeur de cette région marginale est généralement de l'ordre de 2 à 3 fois l'épaisseur de la feuille de verre.

Toutefois, ces contraintes de bord s'équilibrent localement par des contraintes d'extension. A la frontière entre la région marginale des contraintes de bord et la région centrale, on trouve ainsi une région intercalaire où l'intégrale de la différence des contraintes n'est pas nulle et traduit une prépondérance des contraintes d'extension. Cette région intercalaire, avec donc des contraintes anisotropes, peut atteindre une largeur de quelques centimètres et est une région très fragile car le verre y est localement précontraint en extension. Ces contraintes d'extension sont d'autant plus élevées que les contraintes de bord sont grandes.

Il est important de souligner que l'analyse faite ci-dessus est vraie même dans le cas de feuilles de verre non trempées, mais au contraire recuites comme le sont notamment les feuilles de verre plus particulièrement destinées à la fabrication de vitrages feuilletés. Conformément à la technique la plus couramment usitée, ces feuilles de verre sont, après découpe à la forme souhaitée, superposées par paires sur une forme de bombage telle un cadre annulaire ouvert en son centre et réchauffées sur cette forme dans un four pour un bombage par gravité. Quand la forme souhaitée est obtenue, l'ensemble est conduit dans un poste de recuit pour un lent refroidissement du verre permettant le relâchement des contraintes internes induites lors du bombage. Mais la recuisson n'empêche pas un refroidissement plus prononcé des bords refroidis sur trois faces et de ce fait, on observe bien des contraintes de bord dans la région marginale compensées par des contraintes en extension dans une région frontière.

De toute façon, on cherche toujours à installer des contraintes de bord afin d'augmenter la résistance mécanique des bords. C'est pourquoi, il peut même être procédé à des traitements du type léger soufflage de refroidissement sur les bords de façon à augmenter les contraintes de bord même si la contrainte de compression en surface n'excède généralement pas 5-10 MPa pour la région centrale. Mais dans ce cas, on augmente le niveau de la contrainte en extension dans la zone frontière qui devient de ce fait encore plus fragile.

Pour les vitrages tels que des pare-brise, le problème posé par cette zone frontière et/ou le faible niveau des contraintes de bord peut être obvié par l'utilisation de cadres de montage collés ou surmoulés autour du vitrage et qui vont servir de protection. Mais pour un vitrage monté affleurant ou avec un bord libre, aucune protection n'est possible et le vitrage présente une petite région particulièrement fragile et notamment sensible au gravillonnage.

D'autre part, nous avons indiqué plus haut que la trempe thermique permet de conférer à un vitrage une résistance mécanique plus élevée. Mais, si l'on parvient à briser le vitrage, celui-ci éclate en une multitude de fragments au travers desquels la visibilité est pratiquement nulle. Par contre, le cas d'un volume feuilleté en verre recuit, le choc d'un gravillon provoque la formation d'une étoile avec un petit nombre d'éclats autour du point d'impact et une visibilité au travers du vitrage très largement préservée. Mais il faut bien voir que ceci est au prix d'une résistance au gravillonnage beaucoup plus faible que dans le cas d'un vitrage trempé. Donc, si la casse est moins gênante, elle est aussi plus fréquente.

Dans ces conditions, il a été proposé de réaliser des vitrages automobiles feuilletés en verre trempé, mais alors avec l'inconvénient majeur d'un vitrage totalement inutilisable si l'impact parvient à le briser. De plus, de tels vitrages sont très difficiles à produire dans la mesure où, pour éviter des poids excessifs, les vitrages feuilletés pour automobiles sont généralement constitués de feuilles de verre minces qui posent en raison de leur minceur quelques problèmes de reproductibilité du bombage, mais surtout qui sont pratiquement impossible à tremper avec des valeurs de trempe, donc notamment des niveaux de contraintes de compression de surface d'un niveau équivalent à celui retenu pour la trempe des verres monolithiques classiques tels que les vitrages latéraux ou les lunettes arrières. De toute façon, cette solution ne résoud en rien le problème de la zone en extension induite par les contraintes de bord.

La présente invention a pour but un vitrage présentant une région marginale avec des contraintes de bord relativement élevées mais avec néanmoins une région frontière en extension la moins gênante possible, d'une largeur réduite et/ou avec des niveaux de contraintes en extension faibles. Un autre but des inventeurs étaient la réalisation de feuilles de verre ayant subi un traitement thermique de durcissement peuvent présenter des épaisseurs relativement minces et avec une qualité optique et une précision du galbe suffisamment élevées' pour permettre éventuellement leur assemblage par paires dans un vitrage feuilleté.

Selon l'invention, ce but est atteint par un vitrage formé d'au moins une feuille de verre d'une épaisseur comprise entre 1,5 et 4 mm, ayant subi un traitement thermique de durcissement, présentant une région centrale où la contrainte de compression de surface est comprise entre 40 et 100 MPa, de préférence entre 50 et 70 MPa et de préférence encore comprise entre 60 et 65 MPa, une région marginale avec une contrainte de bord comprise entre 50 et 100 MPa et une région intermédiaire disposée entre la région centrale et la région marginale présentant une contrainte d'épaisseur anisotropique qui, moyennée sur toute l'épaisseur de la feuille de verre correspond à une contrainte d'extension inférieure à 10 MPa.

Quand il est destiné à un véhicule automobile, le vitrage selon l'invention ne répond pas aux normes de sécurité imposées pour les vitrages monolithiques et de ce fait, doit également comporter au moins une feuille de matière plastique et il est alors constitué par un composite feuilleté. Il peut être utilisé un composite feuilleté symétrique par exemple du type intercalaire verre/plastique/verre, l'intercalaire plastique étant typiquement à base de polyvinylbutyral ou encore un composite feuilleté asymétrique par exemple du type verre/matière plastique, la matière plastique étant alors typiquement un polyuréthane en couche ou en feuille, qui doit être mou ou du moins flexible. Bien entendu, des assemblages plus complexes peuvent également être utilisés qui comportent éventuellement plus de deux feuilles de verre.

De préférence encore, la contrainte d'extension présentée par la région intermédiaire est comprise entre 3 et 7 MPa, et est ainsi notablement inférieure à la contrainte d'extension observée dans le cas de vitrages trempés. Autrement dit, un éventuel impact dans cette région intermédiaire sera beaucoup moins dangereux pour le vitrage.

Des caractéristiques énoncées ci-dessus, il ressort par ailleurs que les vitrages selon l'invention présentent des contraintes de bord élevées qui lui confèrent une bonne résistance lors des manipulations. Par ailleurs, le niveau des contraintes isotropes a pour conséquence une figure de casse bien caractéristique avec la formation d'éclats de grandes dimensions et des lignes de fractures ou de fissures dont un grand nombre de ramifications aboutissent au bord du vitrage.

La région intermédiaire, qui reste la plus fragile même si cette fragilité est diminuée en raison des faibles valeurs de la contrainte en extension, ne s'étend pas, de préférence, au-delà de 20 mm du bord de la feuille de verre et de préférence encore, pas au-delà de 15 mm. Elle est de ce fait tout particulièrement étroite ; il faut d'ailleurs souligner que la région marginale est avantageusement d'une largeur comprise entre une et trois fois l'épaisseur de la feuille de verre, de sorte que la largeur de la région intermédiaire n'est généralement pas supérieure à 5-10 mm. Autrement dit, la probabilité pour que l'impact se produise dans cette région fragile est beaucoup plus faible qu'avec des vitrages selon l'art, que ceux-ci soient trempés ou recuits.

Les vitrages selon l'invention sont par exemple obtenus par un procédé de bombage sur un lit de conformation fait par exemple de rouleaux ou d'autres éléments tournants, dans lequel le traitement des feuilles de verre est complètement individualisé y compris au stade du refroidissement. Conviennent plus particulièrement ceux de ces procédés dans lesquels le refroidissement du verre s'effectue alors qu'il est toujours porté par les éléments de support. Parmi ces procédés, citons plus particulièrement, le procédé de bombage consistant en ce que, les unes à la suite des autres, des feuilles de verre préchauffées à température de bombage défilent selon une trajectoire longitudinale courbe substantiellement conique de révolution, ou essentiellement cylindrique tangentant la trajectoire plane dans le four de réchauffage et passant entre des caissons de soufflage d'un gaz froid, puis basculent pour suivre alors jusqu'à leur complet refroidissement une trajectoire plane.

Le procédé ci-dessus évoqué est notamment connu des brevets ou demandes de brevet FR-B2-2 442 219, EP-B-133 114, EP-A-346 197, EP-A-346 198 et FR-A-2 650 820 où les feuilles de verre sont trempées pendant leur trajectoire longitudinale courbe et dont le contenu des descriptions doit être considéré comme ici incorporé. Dans le cadre de l'invention, le refroidissement est bien sûr moins intense (pour une même épaisseur de verre considérée) que dans le cas d'une trempe classique. Mais il faut souligner que les vitrages selon l'invention incorporent généralement des feuilles de verre plus minces qui imposent des pressions de soufflage relativement plus fortes. En pratique, il a été constaté que les pressions de soufflage de refroidissement employées pour l'obtention d'un vitrage de 3 mm présentant une fragmentation conforme aux normes de sécurité en matière de vitrages automobiles trempés conviennent pour la réalisation d'un vitrage présentant un état des contraintes conforme à l'invention et d'environ 2,5 mm d'épaisseur.

Dans ce type de procédé de bombage, les feuilles défilent sur un lit de conformation, de préférence constitué par des rouleaux, qui supporte toute la face inférieure de la feuille. D'autres rouleaux ou d'autres moyens de maintien peuvent éventuellement agir sur la face supérieure. Le traitement subi par la feuille est donc très largement uniforme alors que dans les procédés utilisant un cadre - cadre d'effondrement ou cadre de pressage - il y a une plus grande différenciation entre le traitement des bords et le traitement de la partie centrale. Ceci a pour premier avantage, une plus grande maîtrise du galbe obtenu dans la partie centrale du vitrage. De ce fait, ce procédé est tout particulièrement adapté à la production de vitrages montés coulissants comme les vitrages latérales d'automobiles qui doivent pouvoir passer dans une fente relativement étroite, sauf si le constructeur choisit d'employer des joints d'étanchéité épais, donc peu esthétiques, et dont l'efficacité va aller en s'amoindrissant au fil des années.

De façon inattendue, il a été constaté par ailleurs que la reproductibilité de ce type de procédé de bombage est telle qu'elle permet d'assembler dans un vitrage composite deux feuilles de verre, à la condition toutefois que celles-ci aient été traitées pendant une même période de production dont la durée n'excède pas, par exemple, 15 minutes pour une cadence par exemple de 1000 volumes à l'heure.

Cette possibilité d'un appariement des volumes est tout à fait remarquable car il faut bien souligner que dans tous les procédés connus de bombage de feuilles de verre destinées à un vitrage feuilleté, la dernière étape consiste toujours dans un recuit alors que les feuilles de verre destinées à être assemblées sont placées l'une sur l'autre afin d'obtenir une parfaite coïncidence des galbes. De ce fait, le traitement n'est pas parfaitement individualisé et dès le début du procédé, les feuilles de verre sont appariées, il en résulte que si un quelconque défaut optique ou de galbe est constaté sur l'une des feuilles de verre, la paire doit être mise au rebut.

Une autre différence importante avec ces procédés connus de l'art est que des cadences de production particulièrement élevées peuvent être employées et ce, tout en préservant une très grande qualité optique.

Par ailleurs, comme indiqué précédemment que l'invention vise essentiellement la production de vitres latérales ou de toits ouvrants, produits destinés à des véhicules qui selon l'option choisie par l'acheteur, seront équipés de vitrages trempés, feuilletés "simples" ou avec un certain niveau de trempe ; en termes de produits, les deux types de vitrages appartiennent donc à la même famille et le fabricant a tout intérêt à utiliser une même ligne de production, de sorte qu'une modification de l'équilibre de la demande peut être prise en compte rapidement et pratiquement sans dommage. Cet aspect avantageux est ici encore renforcé du fait que, pour ne pas augmenter le poids des vitrages - et leur coût fonction directement de leur épaisseur lorsqu'on substitue un vitrage trempé à un vitrage feuilleté, on cherche à ne pas trop augmenter l'épaisseur totale du vitrage alors que celui-ci est formé de deux feuilles de verre. Typiquement, on passe d'un vitrage trempé de 3,2 mm à un feuilleté 2/0,76/2, le chiffre intermédiaire correspondant à l'épaisseur de la feuille de matière plastique (PVB). Or, pour obtenir un niveau de contraintes donné, il faut une 'pression de soufflage du gaz froid d'autant plus grande que la feuille de verre est mince et il a été indiqué plus haut que les niveaux de contraintes de bord souhaitées sont obtenus pour une feuille de verre d'environ 2 mm avec des pressions de soufflage voisines de celles employées pour l'obtention d'un vitrage de 3 mm présentant une fragmentation conforme aux normes de sécurité en matière de vitrages trempés. Pour du verre de 2 mm, il n'y a donc pratiquement pas de réglage supplémentaire à effectuer. Comme par ailleurs l'aspect général de l'automobile ne doit pas être modifié et que les galbes visés sont parfaitement identiques, la polyvalence de la ligne de production est donc totale.

Le soufflage d'air froid par des caissons à buses sur des feuilles de verre en mouvement se traduit par une structure particulière des contraintes, visible sous des conditions d'éclairement particulières et notamment en lumière polarisée. On fait alors apparaître des raies alternées d'intensité de coloration plus ou moins marquées et se prolongeant pratiquement jusqu'au bord du vitrage. Dans les mêmes conditions d'éclairement, une feuille de verre ayant subi un traitement de recuit donne une image totalement blanche sur toute la surface de la feuille de verre à l'exception de la bande périphérique reflétant les contraintes de bord.

D'autres détails et caractéristiques avantageuses de l'invention ressortent de la description faite ci-après en référence aux dessins annexés qui représentent :
* **figure 1** : un schéma d'une ligne de production adaptée à la mise en oeuvre du procédé selon l'invention.
* **figure 2** : une image de casse d'un vitrage feuilleté ayant subi une opération de recuit,
* **figure 3** : une image de casse d'un vitrage selon l'invention.

Pour bien caractériser les vitrages selon l'invention, il a été effectué une série de mesures destinées à préciser les états de contrainte obtenus selon différents procédés, et notamment les niveaux de contrainte dans les différentes régions et la largeur des régions périphériques entourant la région centrale.

Les contraintes de compression de surface ont été mesurées au moyen d'un épibiascope tel que celui décrit dans l'article de mécanique de la revue française de M. Claude GUILLEMENT et M. Paul ACLOQUE , intitulé " Nouvelles méthodes optiques de détermination des contraintes au voisinage des surfaces de milieux transparents " - 1962 - page 157 à 163.

Pour déterminer les contraintes de bord, on a mesuré la différence des contraintes principales au voisinage du bord par une méthode optique employant un compensateur dit de Babinet. Sachant que pour des raisons physiques, la contrainte perpendiculaire au bord est nulle, exactement au bord et négligeable prés de celui-ci, on a déduit la contrainte tangentielle au bord.

**TABLEAU I**

| | n°. 1 | n°. 2 | n°. 3 | n°. 4 | n°. 5 | n°. 6 |
|---|---|---|---|---|---|---|
| Ep.feuille verre | 3,15 mm | 3,15 mm | 2,58 mm | 2,58 mm | 2,58 mm | 2,05 mm |
| Contraintes de bord | 20-50 MPa | 50-60 MPa | 60-85 MPa | 20-25 MPa | 40 MPa | 60-80 MPa |
| Dist. Bord lig.neutre | 2,5-3 mm | 4-4,5 mm | 5,5-6,5 mm | 5-8 mm | 5-10 mm | 4,5-5,5 mm |
| Contraintes extension | 7-16 MPa | 5-7 MPa | 9-16 MPa | 4-6 MPa | 8-14 MPa | 4-6 MPa |
| Limite zone extension | 17-22 mm | 12-18 mm | 25-30 mm | 40-65 mm | 45-55 mm | 10-15 mm |
| Contraintes de surface | 133 MPa | 60-64 MPa | 120 MPa | 3-5 MPa | 3-5 MPa | 60-65 MPa |

Il est précisé que la ligne neutre est le lieu où la valeur moyennée sur l'épaisseur de ces contraintes de bord mesurées tangentiellement s'annule.

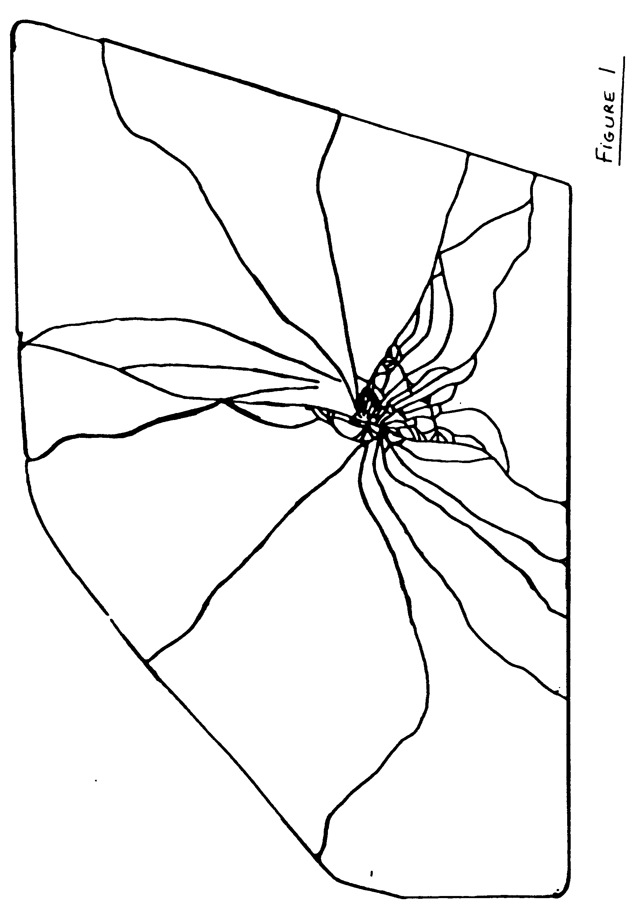

Les essais n° 1, 2 et 6 ont été réalisés sur une ligne de production sur la technique connue notamment du brevet FR-B-2 242 219 et schématisés à la figure 1. A noter que seuls les éléments de convoyage ont été représentés pour plus de clarté. Selon cette technique, la feuille de verre 1 traverse en premier lieu une zone de réchauffage 2 où elle est véhiculée par un convoyeur horizontal constitué par une série de rouleaux moteurs. A la sortie de la zone de réchauffage 2, sa température étant alors supérieure ou égale à sa température de bombage, elle pénètre dans la première partie de la dans la zone de bombage 3 dans laquelle les rouleaux sont montés selon un profil cylindrique longitudinalement, avec un rayon R₁. Les rouleaux forment ainsi un lit de conformation de préférence à concavité tournée vers le haut et en cheminant (de gauche à droite sur la figure 1) sur ce lit ; les feuilles de verre acquièrent ainsi une courbure cylindrique avec un rayon de courbure R₁, obtenue sous l'action combinée de la gravité, d'éventuels éléments supérieurs et de leur vitesse.

La première partie de la zone de bombage 3 est suivie d'une seconde partie qui est également une zone de refroidissement où les rouleaux sont disposés de même selon un profil circulaire de rayon R₁. Les organes de refroidissement sont constitués par des caissons de soufflage 4 munis de buses fixes disposées de part et d'autre des rouleaux agissant ainsi sur les deux faces du vitrage de sorte qu'en passant entre ces caissons 4, et suivant la pression de soufflage choisie, en fonction de son épaisseur, la feuille de verre bombée sera ou trempée ou simplement durcie en position bombée. Les feuilles de verre refroidies sont enfin évacuées par un convoyeur plan 5 qui traverse une zone de refroidissement secondaire, un dispositif basculant 6 facilitant éventuellement leur sortie de la zone de refroidissement 4.

Perpendiculairement à la courbure principale du rayon R₁, parallèlement aux bords droits, on peut éventuellement conférer à la feuille de verre une courbure secondaire de rayon r₂, r₂ étant de préférence supérieur à 20 mètres, cette limite faisant référence à des considérations techniques relatives à la construction de rouleaux en forme. Dans ce cas, les rouleaux seront de préférence équipés de dispositifs de contre-fléchissement comme indiqué dans la demande de brevet EP-A-413 619 et le lit de conformation sera également complété par un second jeu de rouleaux agissant sur la face supérieure de la feuille de verre et aidant à la progression du verre. Ces éléments supérieurs sont également utilisés lorsque le lit de conformation suit une conique vraie, non cylindrique, (FR-90.10585 du 23 août 1990) ou est conforme aux enseignements de la demande de brevet FR-A-90.16178 du 21 décembre 1990.

En fonction de l'épaisseur de la feuille de verre et/ou du degré de trempe souhaité, on ajuste la pression de soufflage de refroidissement. Pour la production de vitrages selon l'invention, il est préférable que le refroidissement par les caissons de soufflage de trempe soit mené jusqu'à ce que le gradient de température, selon l'épaisseur, soit d'au plus 50°C, les feuilles de verre présentant, lors de leur basculement une température à coeur inférieure à la température de ramollissement du verre. A noter que même si ce procédé comporte un traitement des feuilles de verre complètement individualisé jusqu'au stade d'un complet refroidissement, la reproductibilité du galbe, et la qualité optique sont telles qu'elles autorisent un assemblage par paires des feuilles de verre bombées, à la condition toutefois de choisir des feuilles de verre traitées dans des conditions suffisamment identiques (de façon à s'affranchir des dérives liées aux modifications de la chauffe (changement de consigne du four ou tout simplement variation de la température dans l'atelier de production) et à l'usure de pièces comme les rouleaux. Pour une ligne de production travaillant environ 1000 vitrages à l'heure, on pourra assembler par exemple des volumes produits dans le même quart d'heure.

L'essai n° 3 a été réalisé dans une installation conforme aux enseignements du brevet EP-B-3391. La feuille de verre est chauffée dans un four horizontal, aspirée par un élément supérieur plan percé sur toute sa surface de petits orifices puis laissée tomber sur un cadre ouvert en son centre dont la forme correspond à la forme que l'on souhaite conférer au pourtour de la feuille de verre. Après ce bombage par gravité et inertie, la feuille de verre bombée est immédiatement transportée à un poste de trempe, toujours supportée par le cadre de bombage qui fait ainsi office de cadre de trempe. Dans ce procédé bien connu, le rebord de la feuille de verre repose sur le cadre alors que sa partie centrale n'est jamais en contact avec les outils de bombage (à l'exception d'un court instant d'application contre l'élément supérieur).

Les essais n° 4 et 5 ont été réalisés sur une ligne traditionnelle de production de vitres bombées pour feuilletés. Deux feuilles de verre superposées sont déposées à froid sur un cadre ouvert en son centre. Le cadre est conduit dans un four de bombage où les feuilles de verre se déforment sous l'effet de leur propre poids. A la fin du bombage, les feuilles de verre sont conduites dans un poste de recuit pour un refroidissement lent et contrôlé. Dans le cas de l'essai n° 5 ce refroidissement est mené de façon à créer des contraintes de bord relativement élevées, par exemple en procédant comme indiqué dans la demande de brevet EP-A-322 282.

Revenons maintenant aux valeurs indiquées dans le tableau I. Quel que soit le procédé connu de l'art utilisé, la présence de contraintes de bord mesurées tangentiellement et donc parallèles au bord, relativement importantes, conduit à un niveau de contraintes en extension dans la zone intermédiaire supérieur à 7 MPa, pouvant atteindre jusqu'à 16 MPa. De plus, la largeur de la région en extension (limite zone en extension moins distance bord ligne neutre) est comprise entre 17 mm et 40-45 mm, les valeurs les plus élevées étant constatées pour des vitrages bombés par paires. Avec de telles largeurs de quelques centimètres, il existe indiscutablement une zone de fragilité au gravillonnage fort gênante.

Dans le cas de l'invention, au contraire (essais n° 2 et n° 6), les contraintes en extension mesurées sont inférieures à 7 MPa et généralement inférieures à 5 MPa. De plus, la largeur de cette région en extension est comprise entre 5 et 10 mm et couvre donc une surface bien moindre qu'avec les vitrages selon l'art.

Le comportement à la casse d'un vitrage selon l'invention est aussi remarquable.

Les vitrages trempés selon les essais n° 1 et n° 3 présentent une casse conforme à la réglementation européenne en matière de vitrages automobiles trempés, soit, entre 50 et 350 éclats pour tout carré de 5 cm de côté, sans aiguille de plus de 7,5 cm, tous les fragments ayant une dimension inférieure à 3,5 cm², le décompte n'étant pas effectué dans un rayon de 7,5 cm autour du point d'impact et dans une bande de 2 cm de large à la périphérie du vitrage.

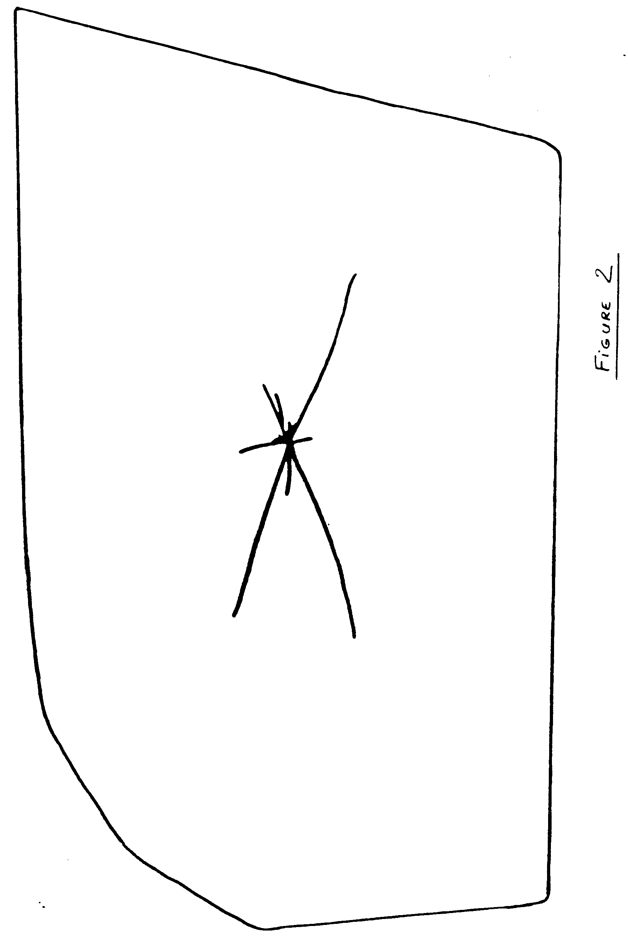

Les vitrages n° 4 et n° 5 ont une figure de casse traditionnelle pour un vitrage feuilleté, et illustrée à la figure 2. Avec un gravillon ou un objet équivalent, on provoque la formation d'une étoile mais pas celle d'éclats (ou dans d'autres cas de figures éventuellement la présence de seulement quelques éclats autour du point d'impact). D'autre part, les lignes de fractures, en petits nombres, ne se propagent pas jusqu'au bord mais s'étendent au plus sur une quinzaine de centimètres.

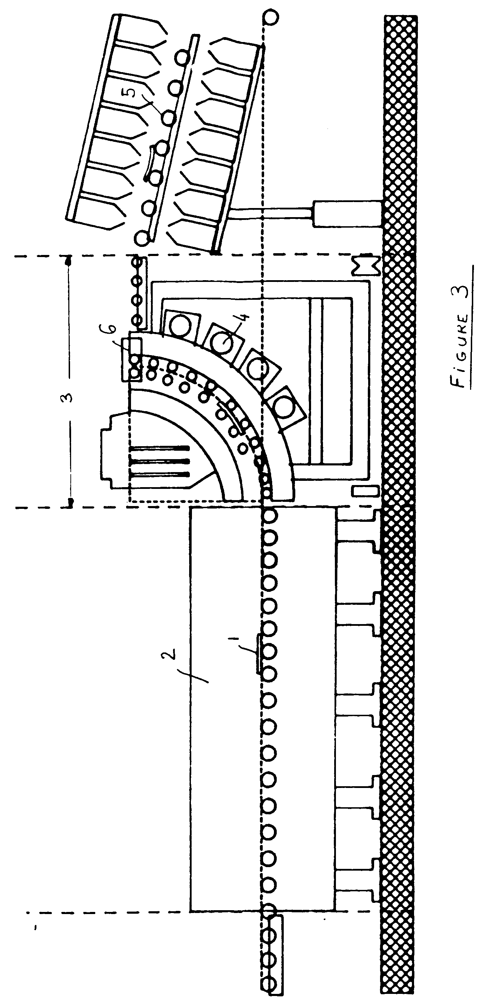

Dans le cas selon l'invention représenté à la figure 3, le nombre de lignes de fractures est beaucoup plus grands et les diverses ramifications aboutissent au bord du vitrage, formant toute une série d'éclats mais contrairement à ce qui se passe dans le cas d'un vitrage effectivement trempé, ces éclats sont de grandes dimensions. Toutefois, on note l'absence d'aiguilles et surtout le fait que ces éclats restent collés par la feuille de matière plastique type PVB et que la sécurité des passagers reste ainsi assurée - et même améliorée car le vitrage permet encore une bonne visibilité en son travers.

Par ailleurs, les vitrages selon l'invention peuvent être reconnus par leur simple image sous une lumière polarisée qui fait apparaître des tâches d'irisation caractéristiques du refroidissement. Les vitrages selon l'invention comporte ainsi des raies alternées d'intensité de coloration plus ou moins marquée et se prolongeant jusqu'au bord du vitrage. En moins prononcé, on retrouve ainsi l'image d'un vitrage trempé "classique", tel que celui de l'essai n° 1. L'image d'un vitrage feuilleté "classique" est au contraire totalement blanche sur toute la surface de la feuille à l'exception d'une bande périphérique très légèrement colorée, reflet des contraintes de bord. Ceci traduit un renforcement de toute la surface - avec de plus des contraintes de bord élevées. Ce point est tout particulièrement avantageux dans le cas de vitres latérales fixées le plus souvent d'un seul côté (la vitre doit pouvoir être abaissée) et qui pourtant sont soumises à des sollicitations très grandes (claquage de portières par exemple).

Enfin, l'examen attentif des vitrages selon l'invention ne révèle pas de "plats", ni de points d'inflexion de la courbure à proximité des bords, témoignage de l'absence de cadre sur lequel reposerait le vitrage pendant son formage.

## Revendications

1. Vitrage notamment pour véhicules automobiles formé d'au moins une feuille de verre d'une épaisseur comprise entre 1,5 et 4 mm, ayant subi un traitement thermique de durcissement, présentant une région centrale où la contrainte de compression de surface est comprise entre 40 et 100 MPa, de préférence entre 50 et 70 MPa et de préférence encore comprise entre 60 et 65 MPa, une région marginale avec une contrainte de bord comprise entre 50 et 100 MPa et une région intermédiaire disposée entre la région centrale et la région marginale présentant une contrainte d'épaisseur anisotropique qui, moyennée sur toute l'épaisseur de la feuille de verre correspond à une contrainte d'extension inférieure à 10 MPa.

2. Vitrage selon la revendication 1, caractérisé en ce que la région intermédiaire présente une contrainte d'extension comprise entre 3 et 7 MPa.

3. Vitrage selon l'une des revendications précédentes, caractérisé en ce que la région intermédiaire ne s'étend pas au-delà de 20 mm du bord de la feuille de verre et de préférence pas au-delà de 15 mm.

4. Vitrage selon l'une des revendications précédentes, caractérisé en ce que la région marginale a une largeur comprise entre une fois et trois fois l'épaisseur de la feuille de verre.

5. Vitrage selon l'une des revendications précédentes, caractérisé en ce que vu sous une lumière polarisé, il présente des raies alternées d'intensité de coloration plus ou moins marquée, se prolongeant jusqu'au bord du vitrage.

6. Vitrage selon l'une des revendications précédentes, caractérisé en ce qu'il ne présente pas de plats sur les bords.

7. Vitrage selon l'une des revendications précédentes, caractérisé en ce qu'il forme un composite asymétrique, avec une feuille ou une couche flexible sur une face.

8. Vitrage selon l'une des revendications 1 à 6, caractérisé en ce qu'il comporte un ensemble composite feuilleté symétrique.

9. Procédé de préparation d'un vitrage selon la revendication 8, caractérisé en ce qu'il consiste en un procédé de bombage sur un lit de conformation dans lequel le traitement des feuilles de verre est complètement individualisé, y compris au stade du refroidissement.

10. Procédé de préparation d'un vitrage selon la revendication 8, selon lequel les unes à la suite des autres, les feuilles de verre réchauffées à température de bombage défilant selon une trajectoire longitudinale courbe substantielle conique de révolution, ou essentiellement cylindrique, tangentant la trajectoire plane suivie dans le four de réchauffage passant entre des caissons de soufflage d'un gaz froid ou tiède, basculent pour suivre une trajectoire jusqu'à leur complet refroidissement, les feuilles de verre ainsi bombées et refroidies étant expédiées au poste d'assemblage par lots correspondant à une période de production commune n'excédant pas 15 minutes.

11. Procédé selon la revendication 10, caractérisé en ce que ladite trajectoire longitudinale substantiellement conique de révolution est ascendante.

12. Procédé selon la revendication 10 ou 11, caractérisé en ce que ladite trajectoire longitudinale substantiellement courbe est cylindrique.

13. Procédé selon la revendication 10 ou 11, caractérisé en ce que ladite trajectoire longitudinale substantiellement conique de révolution est une conique vraie.

14. Procédé selon l'une des revendications 10 à 13, caractérisé en ce que les feuilles de verre défilent parallèlement à leur hauteur.

## Claims

1. Glazing, particularly for cars, formed from at least one glass sheet having a thickness between 1.5 and 4 mm, which has undergone a thermal hardening treatment, having a central region where the surface compression stress is between 40 and 100 MPa, preferably between 50 and 70 MPa and in even more preferred manner between 60 and 65 MPa, a marginal region with an edge stress between 50 and 100 MPa and an intermediate region between the central region and the marginal region having an anisotropic thickness stress which, averaged out over the entire thickness of the glass sheet, corresponds to an extension stress below 10 MPa.

2. Glazing according to claim 1, characterized in that the intermediate region has an extension stress between 3 and 7 MPa.

3. Glazing according to one of the preceding claims, characterized in that the intermediate region does not extend beyond 20 mm from the edge of the glass sheet and preferably not beyond 15 mm.

4. Glazing according to one of the preceding claims, characterized in that the marginal region has a thickness between once and three times the thickness of the glass sheet.

5. Glazing according to one of the preceding claims, characterized in that, when seen under polarized light, it has alternate lines of more or less pronounced colour intensity extending up to the edge of the glazing.

6. Glazing according to one of the preceding claims, characterized in that it does not have flats on the edges.

7. Glazing according to one of the preceding claims, characterized in that it forms an asymmetrical composite with a sheet or flexible layer on one face.

8. Glazing according to one of the claims 1 to 6, characterized in that it has a symmetrical, laminated composite assembly.

9. Process for the preparation of a glazing according to claim 8, characterized in that it consists of a bending process on a shaping bed, in which the treatment of the glass sheets is completely individualized, including the cooling stage.

10. Process for the preparation of a glazing according to claim 8, according to which successively the glass sheets heated to the bending temperature travel along a curved, longitudinal trajectory substantially conical of revolution or essentially cylindrical, tangential to the planar trajectory followed in the heating furnace passing between blowing plenums for a cold or tepid gas, tilting in order to follow a trajectory up to the complete cooling thereof, the thus bent and cooled glass sheets being despatched to the assembly station in batches corresponding to a common production period not exceeding 15 minutes.

11. Process according to claim 10, characterized in that said longitudinal trajectory substantially conical of revolution is rising.

12. Process according to claim 10 or 11, characterized in that said substantially curved, longitudinal trajectory is cylindrical.

13. Process according to claim 10 or 11, characterized in that said longitudinal trajectory substantially conical of revolution is truly conical.

14. Process according to one of the claims 10 to 13, characterized in that the glass sheets travel parallel to their height.

## Patentansprüche

1. Verglasung, insbesondere für Automobilfahrzeuge, gebildet aus zumindest einer Glasscheibe einer Dicke zwischen 1,5 und 4mm, die einer thermischen Behandlung zur Härtung unterzogen wurde, und die einen zentralen Bereich aufweist, in dem die Oberflächendruckspannung zwischen 40 und 100MPa liegt, vorzugsweise zwischen 50 und 70MPa und weiter bevorzugt zwischen 60 und 65MPa, einen Randbereich, mit einer Randspannung zwischen 50 und 100MPa und einen Zwischenbereich, der zwischen dem zentralen Bereich und dem Randbereich angeordnet ist, der eine anisotrope Dickenspannung aufweist, die im Mittel über die gesamte Dicke der Scheibe einer Ausbreitungsspannung von weniger als 10MPa entspricht.

2. Verglasung nach Anspruch 1, dadurch gekennzeichnet, daß der Zwischenbereich eine Ausbreitungsspannung zwischen 3 und 7MPa aufweist.

3. Verglasung nach einem der vorhergehenden Ansprüche, dadurch gekennzeichnet, daß sich der Zwischenbereich nicht über 20mm und vorzugsweise nicht über 15mm vom Rand der Glasscheibe aus erstreckt.

4. Verglasung nach einem der vorhergehenden Ansprüche, dadurch gekennzeichnet, daß der Randbereich eine Breite zwischen einmal und dreimal der Dicke der Glasscheibe hat.

5. Verglasung nach einem der vorhergehenden Ansprüche, dadurch gekennzeichnet, daß sie bei Betrachtung unter polarisiertem Licht mehr oder weniger ausgeprägte Strahlen alternierender Colorationsintensität aufweist, die sich bis zum Rand der Verglasung erstrecken.

6. Verglasung nach einem der vorhergehenden Ansprüche, dadurch gekennzeichnet, daß sie an den Rändern keine Ebenen aufweist.

7. Verglasung nach einem der vorhergehenden Ansprüche, dadurch gekennzeichnet, daß sie ein asymmetrisches Komposit bildet, mit einer flexiblen Scheibe oder Schicht auf einer Seite.

8. Verglasung nach einem der Ansprüche 1 bis 6, dadurch gekennzeichnet, daß sie eine symmetrische Scheibenkompositanordnung aufweist.

9. Verfahren zur Herstellung einer Verglasung nach Anspruch 8, dadurch gekennzeichnet, daß es aus einem Wölbungsverfahren auf einem Formbett besteht, auf dem die Behandlung der Glasscheiben vollständig individualisiert und bis zum Stadium des Abkühlens gehalten wird.

10. Verfahren zur Herstellung einer Verglasung nach Anspruch 8, demgemäß die auf die Wölbungstemperatur erwärmten Glasscheiben eine nach der anderen eine längsgewölbte Bahn entlanglaufen, die im wesentlichen rotationskonisch oder im wesentlichen zylindrisch ist und die auf den Erwärmungsofen folgende ebene Bahn berührt, zwischen Blaskästen eines kalten oder lauwarmen Gases durchläuft, und bis zu ihrer vollständigen Abkühlung einer Bahn folgend hin und her schaukelt, wobei die auf diese Weise gewölbten und abgekühlten Glasscheiben in Losen zu dem Montageort befördert werden, die einem allgemeinen Produktionszeitraum von nicht mehr als 15 Minuten entsprechen.

11. Verfahren nach Anspruch 10, dadurch gekennzeichnet, daß die im wesentlichen rotationskonisch gewölbte Längsbahn ansteigt.

12. Verfahren nach einem der Ansprüche 10 oder 11, dadurch gekennzeichnet, daß die im wesentlichen gewölbte Längsbahn zylindrisch ist.

13. Verfahren nach einem der Ansprüche 10 oder 11, dadurch gekennzeichnet, daß die im wesentlichen rotationskonische Längsbahn ein echter Konus ist.

14. Verfahren nach einem der Ansprüche 10 bis 13, dadurch gekennzeichnet, daß die Glasscheiben parallel zu ihrer Höhe laufen.
